# FASCICULE DE BREVET EUROPEEN

(11) **EP 0 622 008 B1**
(45) Date de publication et mention de la délivrance du brevet: **01.07.1998**
(21) Numéro de dépôt: 94420133.4
(22) Date de dépôt: 27.04.1994
(51) Int. Cl.: A01D 34/13, A01D 34/00, A01D 11/06

(54) **Rateau mécanique permettant de défricher, tondre, araser, ratisser toutes sortes d'herbes et végétaux divers**
Mechanischer Rechen zum Kultivieren, Mähen, Nachschneiden und Harken von allen Grassorten und verschiedenen Pflanzen
Mechanic rake for clearing, trimming, raking all kinds of grasses and various plants

(30) Priorité: 28.04.1993 FR 9305260
(43) Date de publication de la demande: 02.11.1994
(73) Titulaire: FORGE DES MARGERIDES, F-03270 Hauterives (FR)
(72) Inventeur: Lange, André, F-38150 Ville sous Anjou (FR)
(74) Mandataire: Schmitt, John

(56) Documents cités:
- AT-B- 354 791
- DE-A- 1 482 010
- DE-C- 621 021
- FR-A- 2 150 644
- FR-A- 2 547 970
- GB-A- 550 670
- GB-A- 2 161 354
- US-A- 1 850 992

## Description

La présente invention a trait à un râteau mécanique permettant de défricher, tondre, araser, ratisser toutes sortes d'herbes et végétaux divers.

Le défrichage, le débroussaillage, la tonte, l'arasage des bordures et le ratissage sont traditionnellement effectués à l'aide d'outils tels que débroussailleuses, tondeuses, taille-bordures et râteaux.

Dans le cas du défrichage-débroussaillage, l'appareil utilisé est une lame d'acier rotative mue à l'aide d'un moteur. Cet appareil est plus particulièrement dangereux pour l'utilisateur, et pour les personnes environnantes car la lame est totalement masquée par les végétaux coupés et elle peut projeter de la terre, des pierres et des brindilles de végétaux.

Lors de la tonte, l'utilisateur emploie une tondeuse à lame rotative sur roulettes ou sur coussin d'air à moteur ou à main ou à lame hélicoïdale. Les tondeuses à lames rotatives sont prévues pour couper des herbes pas trop hautes car elles ont une faible hauteur de coupe. Les tondeuses sont généralement inefficaces pour couper les herbes ou autres végétaux le long des murs, clôtures, arbres ou autres. Du fait de la position de la lame, il y a également des risques d'accident pour les pieds de l'utilisateur. La lame provoque des jets de pierres, de terre et de brindilles qui sont susceptibles d'atteindre l'utilisateur ou les personnes se trouvant à proximité et de les blesser.

Pour araser les bordures et pour couper l'herbe entre les arbustes d'une haie, l'utilisateur emploie un taille-bordure ou des ciseaux à main ou à moteur. Le taille-bordure comporte généralement un moteur électrique qui entraîne un fil en "nylon" permettant la coupe des végétaux. Ce genre d'appareil est très dangereux pour l'utilisateur, car des jets de brins d'herbes atteignent facilement le visage de ce dernier. En outre, l'utilisateur doit constamment rallonger le fil de coupe car ce dernier s'use rapidement au contact des pierres, murs, grillages etc...

Tous les appareils décrits ci-dessus sont prévus pour couper, mais ne permettent pas en même temps de ratisser les végétaux.

Par le brevet DE-C-621 021, on connaît un râteau dont le manche est perpendiculaire aux lames tranchantes, de sorte que, lors de son utilisation, les lames sont inclinées à environ 45° par rapport au sol et reposent par leur extrémité sur le sol. La coupe n'est pas pleinement efficace.

Par le brevet US-A-1 850 992, on connaît une machine à trancher dont le manche forme un angle obtus avec les lames. Il est nécessaire de pousser la machine en cours d'utilisation et ce mouvement n'est pas naturel pour le ramassage des déchets. Cette machine n'est pas un râteau. Aucun moyen de ramassage des déchets coupés n'est prévu.

C'est à ces inconvénients qu'entend plus particulièrement remédier la présente invention.

Le râteau mécanique suivant l'invention a pour but de couper toutes sortes de végétaux et de les ratisser en même temps.

Dans cet esprit, l'invention concerne un râteau mécanique pour défricher, tondre, araser, ratisser toutes sortes d'herbes et végétaux divers, comprenant un manche creux solidaire à l'une des extrémités d'un boîtier renfermant un mécanisme d'entraînement actionné par un moteur électrique ou thermique pour le déplacement transversal et alternatif d'une première lame tranchante par rapport à une seconde lame qui coopère avec la première pour constituer plusiers ciseaux parallèles, caractérisé en ce que la seconde lame est tranchante et en ce que le manche du râteau est incliné d'un angle α d'environ 45° par rapport auxdites lames afin que les lames tranchantes soient dans un plan de coupe parallèle à celui du sol (S), ledit manche étant dirigé dans le sens de ratissage (F), tandis que des patins sont prévus, sous ladite seconde lame, fixes ou réglables suivant la hauteur de coupe recherchée par rapport au sol (S) et que des moyens de ramassage sont fixés en arrière desdites lames tranchantes pour la retenue temporaire des déchets coupés.

Le râteau comprend également sur sa seconde lame tranchante fixe et dans le prolongement de chaque dent des doigts de protection.

Le dessin annexé, donné à titre d'exemple, permettra de mieux comprendre l'invention, les caractéristiques qu'elle présente et les avantages qu'elle est susceptible de procurer :
Fig. 1 est une vue en perspective illustrant le râteau mécanique suivant l'invention.
Fig. 2 est une vue en perspective éclatée montrant les lames tranchantes du râteau mécanique.
Fig. 3 est une coupe représentant la position de la lame tranchante par rapport au manche et au sol.
Fig. 4 est une coupe semblable à celle de fig. 3, mais montrant une variante du râteau mécanique suivant l'invention.
Fig. 5 à 7 sont des vues schématiques illustrant le déplacement des deux lames mobiles l'une par rapport à l'autre selon le dispositif de la variante représenté en fig. 4.
Fig. 8 est une coupe représentant une seconde variante du râteau mécanique suivant l'invention.
Fig. 9 à 11 sont des vues schématiques suivant IX-IX (fig. 8) montrant le déplacement des lames tranchantes l'une par rapport à l'autre selon la seconde variante.

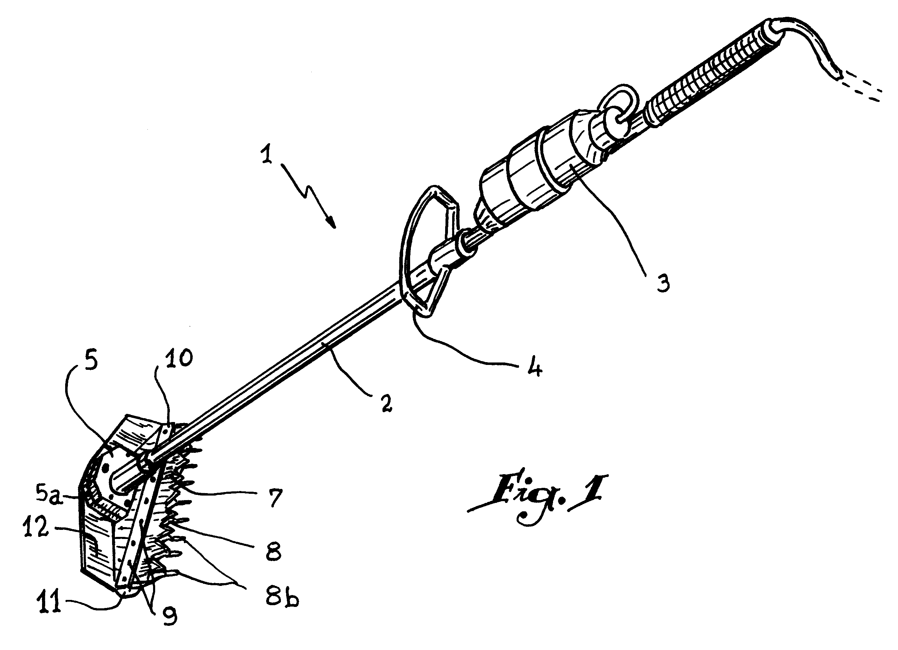

On a représenté en fig. 1, 2 et 3 un râteau mécanique 1 comprenant un manche avantageusement creux 2 ou analogue qui supporte d'une part un moteur électrique ou thermique 3 placé à proximité d'une poignée 4 et d'autre part un boîtier de commande 5 solidaire de l'extrémité inférieure dudit manche 2.

Le boîtier de commande 5 renferme un mécanisme d'entraînement 6 actionné par le moteur 3 pour le déplacement transversal et alternatif d'une lame tranchante 7.

Le mécanisme d'entraînement 6 est constitué d'un axe de commande 6a plein ou creux, rigide ou flexible, téléscopique ou non (fig. 3). L'axe de commande 6a coopère avec le moteur électrique ou thermique 3 pour entraîner en rotation coaxiale un manchon 6b à l'intérieur du boîtier 5. Le manchon 6b est guidé axialement par l'intermédiaire de roulements 6c à l'intérieur dudit boîtier 5. Le manchon 6b est solidaire d'une came équilibrée 6d qui comprend à l'opposé de sa masse 6e un doigt 6f décalé latéralement par rapport à l'axe principal du manchon 6b.

Le doigt 6f coopère avec une ouverture oblongue et verticale 7a ménagée dans une oreille 7b solidaire de la lame tranchante 7. L'oreille 7b est pliée suivant un angle ouvert de manière que le plan de coupe de la lame 7, donc celui de ses dents 7c du râteau 1, soit parallèle au sol S pendant l'utilisation (fig. 3).

Le boîtier 5 est fermé par un couvercle 5a qui isole le mécanisme d'entraînement 6 afin que la transformation du mouvement rotatif du moteur 3 en un mouvement de translation alternatif soit parfait. Sur le couvercle 5a est fixée une seconde lame tranchante et droite 8 qui est disposée dans un même plan parallèle que celui du plan de coupe de la première lame 7.

La seconde lame 8 est liée à la première 7 par l'intermédiaire de vis et d'écrous 9 qui coopèrent avec des trous oblongs horizontaux 7d afin de guider transversalement la première lame 7 par rapport à la seconde 8.

Ainsi, la première lame 7 est enserrée entre la seconde 8 et une baguette de glissement 10 la laissant libre de coulisser avec un coefficient de frottement le plus faible possible.

La seconde lame 8 qui est fixe, comporte des dents 8a qui forme des ciseaux avec les dents 7c de la lame 7. Les dents 8a de la seconde Lame 8 se prolongent par des doigts 8b à profil aplati, rond ou autre. Les doigts 8b protègent l'utilisateur lors de l'emploi du râteau 1 afin que les ciseaux formés par les dents 7c et 8a des lames 7 et 8 ne viennent pas blesser par exemple les pieds de l'utilisateur.

En dessous de la lame 8 sont fixés dans le couvercle 5a des patins 11 réglables ou non, d'une hauteur prédéterminée d permettant au râteau 1 de glisser sur le sol S.

Sur le couvercle 5a du boîtier 5 et en arrière des lames 7 et 8 est vissé un déflecteur 12 permettant de ramasser des herbes ou différents végétaux préalablement coupés.

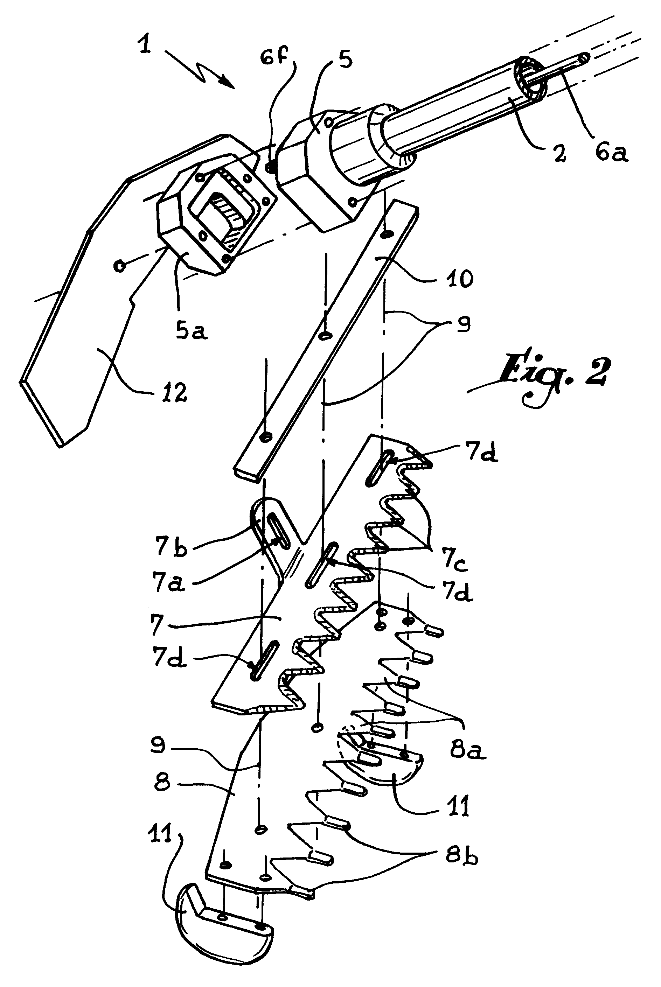

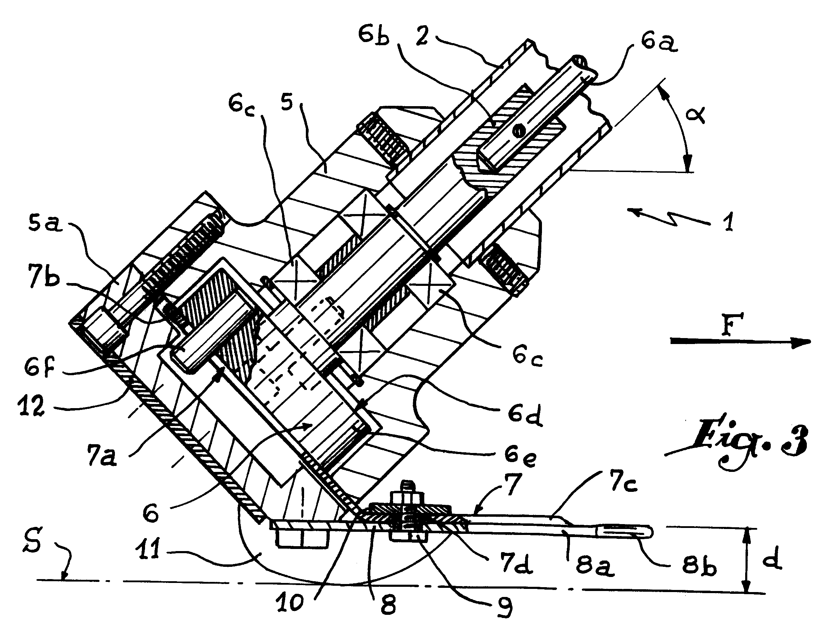

On a représenté en fig. 4 à 7 une variante 1' du râteau mécanique 1 comprenant un boîtier de commande 5' solidaire d'un manche creux 2' ou analogue. Le boîtier 5' renferme un mécanisme d'entraînement 6' qui est actionné par un moteur identique à celui référencé 3 pour le déplacement transversal et alternatif de deux lames tranchantes 7' et 8' .

Le mécanisme d'entraînement 6' est constitué d'un axe de commande 6'a identique à celui 6a du râteau 1. L'axe 6'a coopère avec le moteur électrique ou thermique 3 pour entraîner en rotation coaxiale un manchon 6'b à l'intérieur du boîtier 5'.

Le manchon 6'b est guidé axialement par l'intermédiaire d'un roulement 6'c et d'un doigt 6'g qui coopére avec un trou 5'b ménagé dans le couvercle 5'a du boîtier 5' .

Le manchon 6'b est solidaire de deux cames 6'd, 6'e en forme de disque qui sont décalées de 180°, l'une par rapport à l'autre et traversées par le doigt de guidage 6'g.

La came 6'd coopère avec une ouverture oblongue 7'a de la lame 7' tandis que la seconde came 6'e est placée à l'intérieur d'une ouverture oblongue 8'b de la lame 8'

Les ouvertures 7'a et 8'a des lames 7' et 8' sont ménagées respectivement dans une oreille 7'b et 8'c qui est pliée suivant un angle ouvert de manière que le plan de coupe desdites lames donc des dents 7'c et 8'a du râteau 1' soit parallèle au sol S pendant l'utilisation (fig. 4).

Les lames mobiles 7' et 8' sont guidées l'une par rapport à l'autre par l'intermédiaire d'une baguette inférieure 10' solidaire du couvercle 5'a et d'une baguette supérieure 10'a qui est reliée à celle inférieure au moyen de vis et d'écrous 9'.

En dessous de la baguette 10' sont fixés des patins 11' réglable ou non d'une hauteur prédéterminée, permettant au râteau 1' de glisser sur le sol S. Egalement sur le couvercle 5'a du boîtier 5' et en arrière des lames mobiles 7' et 8' peut être vissé un déflecteur non représenté mais identique à celui 12 du râteau 1 permettant de ramasser des herbes ou différents végétaux préalablement au prés.

En outre, la baguette supérieure 10'a peut être solidaire d'un râteau coudé 13 dont les dents se trouvent devant les lames mobiles 7' et 8' .

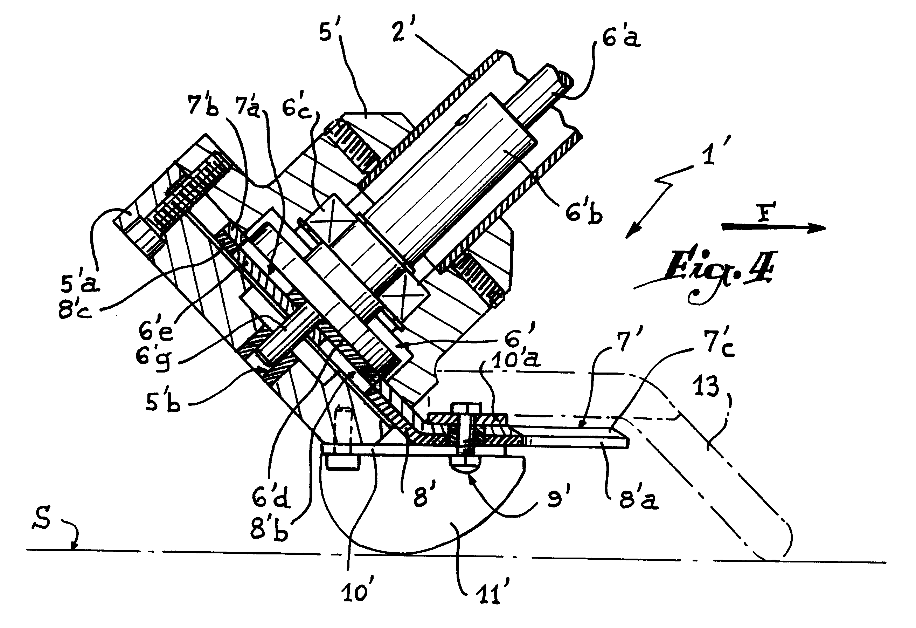

En fig. 5 à 7 on a montré les déplacements transversaux alternatifs des lames 7' et 8' l'une par rapport à l'autre au moyen des cames 6'd et 6'e. En effet les cames 6'd et 6'e sont animées d'un mouvement rotatif permettant par l'intermédiaire des ouvertures 7'a et 8'b d'entraîner les lames mobiles 7' et 8' dans un déplacement transversal et alternatif.

On note que lorsque les cames 6'd et 6'e se trouvent parallèle à l'axe longitudinale des ouvertures oblongues 7'a et 8'b, les dents 7'c et 8'a des lames mobiles 7' et 8' sont décalées les unes par rapport aux autres (fig. 5).

Par contre, lorsque les cames 6'd et 6'e se trouvent perpendiculaires à l'axe longitudinal des ouvertures oblongues 7'a et 8'b, on remarque que les dents 7'c et 8'a des lames mobiles 7' et 8' sont les unes au dessus des autres.

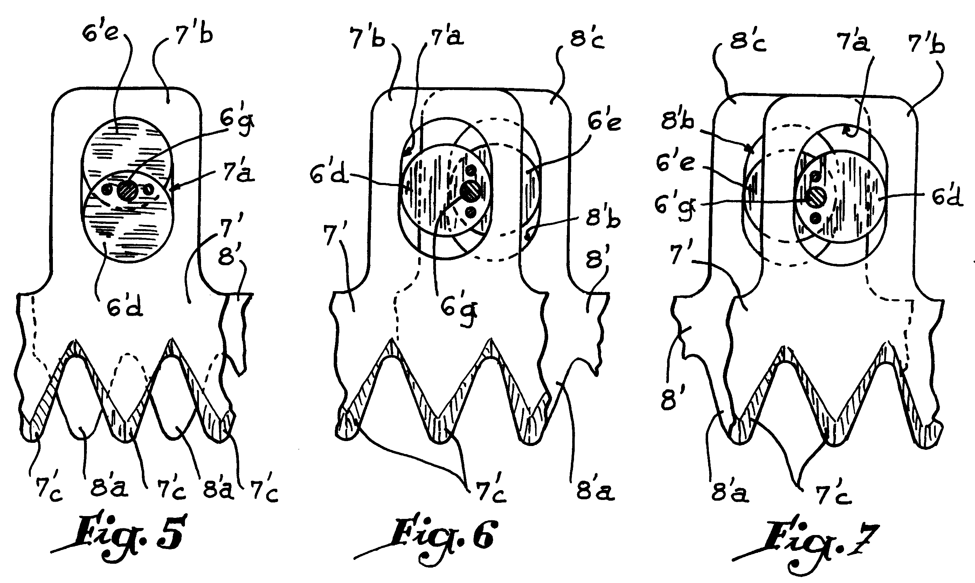

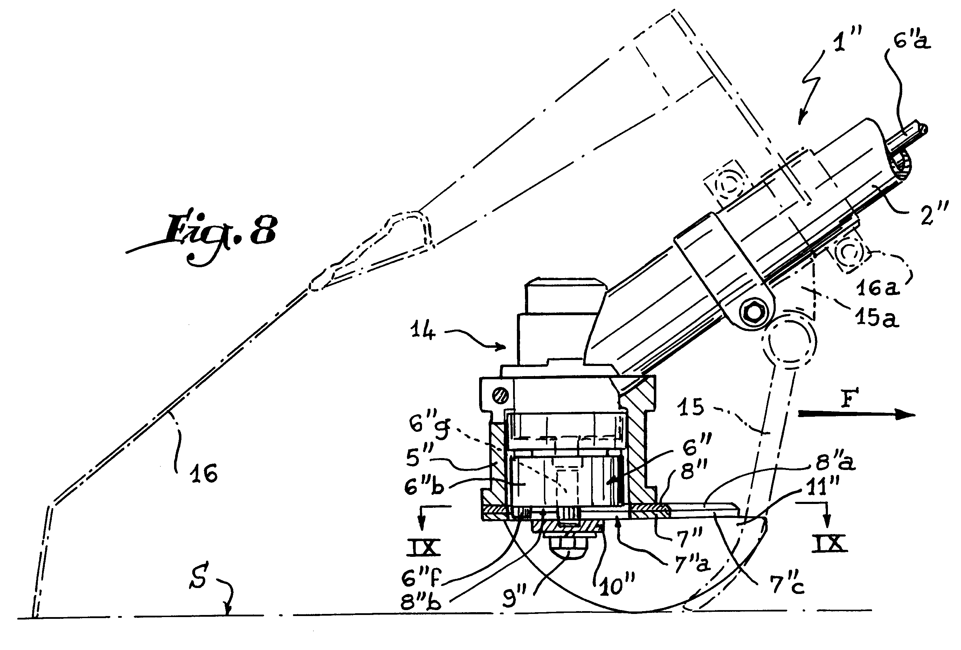

Cette position est identique lorsque par exemple la came 6'd se trouve soit à gauche, soit à droite du doigt de guidage 6'g (fig. 6, 7).

On a représenté en fig. 8 une seconde et dernière variante du râteau mécanique 1 référencé 1'' comprenant un boîtier 5'' solidaire d'un manche creux 2'' identique à celui référencé 2. Le boîtier 5'' est fixé au manche 2'' par l'intermédiaire d'un renvoi d'angle 14 dont ses différents pignons non référencés coopèrent d'une part avec un axe de commande 6''a et d'autre part avec une came 6''b d'un mécanisme d'entraînement 6''.

L'axe de commande 6''a est identique à celui 6a et coopère avec un moteur électrique ou thermique non représenté mais ayant les mêmes caractéristiques que celui 3 montré en fig. 1.

La came 6''b est guidée axialement à l'intérieur du boîtier 5'' par l'intermédiaire d'un doigt de guidage 6''g.

La came 6''b comporte un doigt 6''f décalé latéralement par rapport à l'axe principale de ladite came.

Le doigt 6''f coopère avec une ouverture oblongue et verticale 7''a ménagé dans le corps d'une lame mobile et tranchante 7''.

Entre le boîtier 5'' et la Lame 7'' est prévu une seconde lame fixe 8'' qui comporte une ouverture 8''b pour le passage de la came 6''b.

Les lames 7'' et 8'' sont disposées dans un plan horizontal et parallèle au sol S, tandis que le manche 2'' est incliné d'un angle α par rapport auxdites lames.

La seconde lame 8'' est liée à la première 7'' par l'intermédiaire de vis et d'écrous 9'' qui coopèrent avec des trous oblongs horizontaux non reférencés afin de guider transversalement la première lame 7'' par rapport à la seconde 8''.

Entre les vis et écrous 9'' et la lame 7'' est prévu une baguette de glissement 10'' améliorant le coulissement en réduisant le coefficient de frottement.

En dessous de la lame 7'' sont disposés des patins 11'' réglables ou non d'une hauteur prédéterminer permettant au râteau 1'' de glisser sur le sol S.

Devant les dents 7''c et 8''a des lames 7'' et 8'' suivant le sens de coupe F est prévu un premier râteau 15. Le râteau 15 est articulé et fixé par une bague de serrage 15a sur le manche creux 2'' du râteau mécanique 1''. En outre, un second râteau 16 ou balai pour gazon est fixé en arrière des lames 7'' et 8'' suivant le sens de coupe F. Le balai 16 est fixé sur le manche creux 2'' par l'intermédiaire d'une bague de serrage 16a.

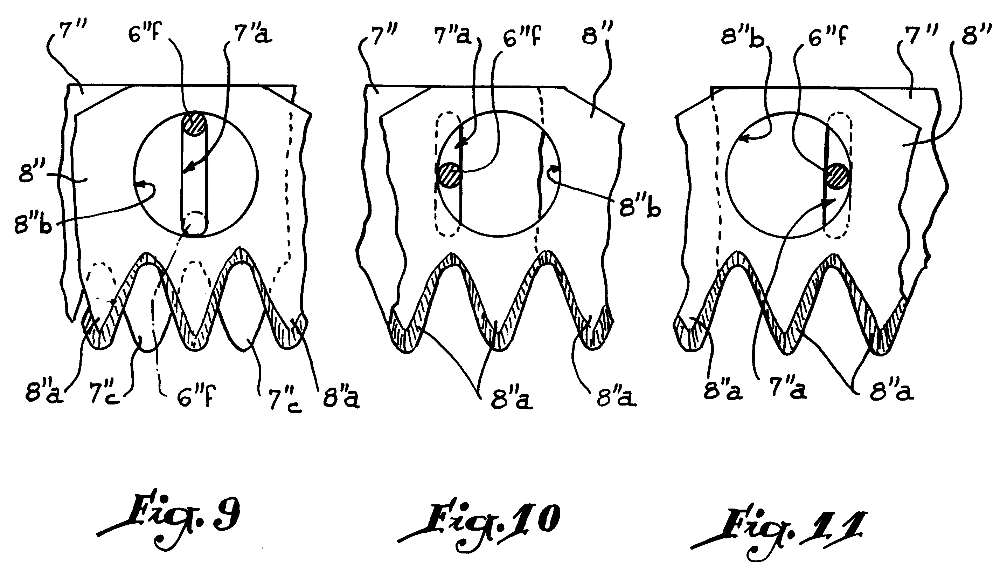

On remarque que le mouvement rotatif de la came 6''b solidaire du doigt 6''f permet d'entraîner dans un déplacement transversal alternatif la lame 7'' de la même manière que pour le râteau 1. Lorsque le doigt 6''f se trouve au voisinage de l'une des extrémités de l'ouverture oblongues 7''a on constate que les dents 7''c et 8''a des lames 7'' et 8'' sont décalées les unes par rapport aux autres (fig. 9).

Par contre, lorsque le doigt 6''f de la came 6''b se trouve au milieu de l'ouverture oblongue 7''a on note que les dents 7''c et 8''a sont les unes au dessus des autres (fig. 10, 11).

Cette variante peut comprendre deux lames mobiles comme cela est décrit préalablement en fig. 4.

On note que les lames 7, 8 et 7', 8' sont inclinées d'un angle égal à environ 45° par rapport à l'axe du manche creux 2, 2' afin que lesdites lames soient toujours dans un plan de coupe parallèle à celui du sol S.

On constate que les lames 7, 8 ; 7', 8' et 7'', 8'' sont dirigées dans le sens de ratissage F afin de ramasser continuellement tout en coupant les végétaux.

On remarque que la largeur des lames 7, 8 ; 7', 8' et 7'', 8'' dépend de la largeur de coupe que l'on souhaite pour le râteau 1, 1' et 1''. Egalement, les lames 7, 8; 7', 8' et 7'', 8'' forment plusieurs ciseaux tranchants qui permettent de couper les herbes en bordure des arbres, murs, grillages ou analogues.

Le moteur électrique 3 peut être prévu sur secteur ou à courant continu sur piles ou accumulateurs rechargeables.

## Revendications

1. Râteau mécanique pour défricher, tondre, araser, ratisser toutes sortes d'herbes et végétaux divers, comprenant un manche creux (2, 2', 2'') solidaire à l'une des extrémités d'un boîtier (5, 5', 5'') renfermant un mécanisme d'entraînement (6, 6', 6'') actionné par un moteur électrique ou thermique (3) pour le déplacement transversal et alternatif d'une première lame tranchante (7, 7', 7'') par rapport à une seconde lame (8, 8', 8'') qui coopère avec la première pour constituer plusiers ciseaux parallèls, caractérisé caractérisé en ce que la seconde lame est tranchante et en ce que le manche (2, 2', 2'') du râteau (1, 1', 1'') est incliné d'un angle α d'environ 45° par rapport auxdites lames afin que les lames tranchantes (7 ,7', 7'' et 8, 8', 8'') soient dans un plan de coupe parallèle à celui du sol (S), ledit manche étant dirigé dans le sens de ratissage (F), tandis que des patins (11, 11', 11'') sont prévus, sous ladite seconde lame (8, 8', 8''), fixes ou réglables suivant la hauteur de coupe recherchée par rapport au sol (S) et que des moyens de ramassage (12, 16) sont fixés en arrière desdites lames tranchantes pour la retenue temporaire des déchets coupés.

2. Râteau suivant la revendication 1, caractérisé en ce que la seconde lame (8) comporte dans le prolongement de chaque dent (8a) des doigts (8b) protégeant l'individu.

3. Râteau suivant la revendication 1, caractérisé en ce que les lames (7, 7', 8') comportent respectivement une oreille (7b, 7'b, 8'c) pliées suivant un angle ouvert de manière que le plan de coupe desdites lames soit parallèle au sol (S).

4. Râteau suivant la revendication 1, caractérisé en ce que le moteur életrique ou thermique (3) est fixé à l'extrémité du manche creux (2, 2', 2'') se trouvant à l'opposé du boîtier (5, 5', 5'').

5. Râteau suivant la revendication 1, caractérisé en ce que le mécanisme d'entraînement (6) est constitué d'un axe de commande (6a) pouvant être plein ou creux, rigide ou flexible, télescopique ou non à l'extrémité duquel est fixé un manchon (6b) guidé axialement à l'intérieur du boîtier (5), ledit manchon étant solidaire d'une came équilibrée (6d) coopérant avec la lame tranchante (7) pour lui donner un déplacement transversal alternatif.

6. Râteau suivant la revendication 1, caractérisé en ce que le mécanisme d'entraînement (6') est constitué d'un axe de commande (6'a) pouvant être plein ou creux, rigide ou flexible, télescopique ou non à l'extrémité duquel est fixé un manchon (6'b) guidé axialement à l'intérieur du boîtier (5'), ledit manchon étant solidaire de deux cames équilibrées (6'd, 6'e) coopérant respectivement avec les lames tranchantes (7', 8') pour lui donner un déplacement transversal alternatif.

7. Râteau suivant la revendication 6, caractérisé en ce que le mécanisme d'entraînement (6') comporte deux cames (6'd, 6'e) en forme de disque qui sont décalées de 180 degrés l'une par rapport à l'autre pour le déplacement transversal et alternatif des lames (7', 8').

8. Râteau suivant la revendication 7, caractérisé en ce que la came (6'd) coopère avec une ouverture oblongue (7'a) de la lame (7'), tandis que la came (6'e) est introduite dans une ouverture oblongue (8'b) de la lame (8').

9. Râteau suivant la revendication 1, caractérisé en ce que la position des lames (7'', 8'') par rapport au sol (S) est réalisée par l'intermédiaire d'un renvoi d'angle (14) qui permet d'incliner le manche (2'') par rapport au boîtier (5'') ; ledit renvoi d'angle coopérant avec le mécanisme d'entraînement (6'') permet le déplacement transversal et alternatif de la lame (7'').

10. Râteau suivant la revendication 1, caractérisé en ce que les moyens de ramassage (12, 16) sont constitués respectivement d'un déflecteur et d'un balai métallique solidaires chacun du boîtier (5) et du manche creux (2'').

11. Râteau suivant la revendication 1, caractérisé en ce qu'un râteau (13, 15) est fixé devant les lames tranchantes (7, 7', 7'' ; 8, 8', 8'') suivant le sens de ratissage (F).

## Claims

1. Mechanical rake for clearing, mowing, levelling, raking all kinds of grass and various plant matter, comprising a hollow handle (2, 2', 2'') secured at one of its ends to a casing (5, 5', 5'') containing a drive mechanism (6, 6', 6'') driven by an electric motor or engine (3) for moving a first cutting blade (7, 7', 7'') back and forth transversely with respect to a second blade (8, 8', 8'') which interacts with the first to form a number of parallel shears, characterized in that the second blade is a cutting blade and in that the handle (2, 2', 2'') of the rake (1, 1', 1'') is inclined by an angle α of approximately 45° with respect to the said blades so that the cutting blades (7, 7', 7'' and 8, 8', 8'') are in a cutting plane parallel to that of the ground (S), the said handle pointing in the direction of raking (F), while shoes (11, 11', 11'')are provided under the said second blade (8, 8', 8''), these shoes being fixed or adjustable to suit the desired cutting height relative to the ground (S) and that collecting means (12, 16) are fixed behind the said cutting blades for temporarily holding the waste cuttings.

2. Rake according to Claim 1, characterized in that the second blade (8) has, in the extension of each tooth (8a), fingers (8b) to protect the individual.

3. Rake according to Claim 1, characterized in that the blades (7, 7', 8') each have a lug (7b, 7'b, 8'c), the lugs being bent at an obtuse angle so that the cutting plane of the said blades is parallel to the ground (S).

4. Rake according to Claim 1, characterized in that the electric motor or engine (3) is fixed to the opposite end of the hollow handle (2, 2', 2'') from the casing (5, 5', 5'').

5. Rake according to Claim 1, characterized in that the drive mechanism (6) consists of an operating shaft (6a) which may be solid or hollow, rigid or flexible, telescopic or non-telescopic, to the end of which is attached a sleeve (6b) guided axially inside the casing (5), the said sleeve being secured to a balanced cam (6d) cooperating with the cutting blade (7) to make it move transversely back and forth.

6. Rake according to Claim 1, characterized in that the drive mechanism (6') consists of an operating shaft (6'a) which may be solid or hollow, rigid or flexible, telescopic or non-telescopic, to the end of which is attached a sleeve (6'b) guided axially inside the casing (5'), the said sleeve being secured to two balanced cams (6'd, 6'e) cooperating respectively with the cutting blades (7', 8') to make them move transversely back and forth.

7. Rake according to Claim 6, characterized in that the drive mechanism (6') comprises two disc-shaped cams (6'd, 6'e) which are offset by 180 degrees from one another for making the blades (7', 8') move transversely back and forth.

8. Rake according to Claim 7, characterized in that the cam (6'd) cooperates with an oblong opening (7'a) in the blade (7'), while the cam (6'e) is introduced into an oblong opening (8'b) in the blade (8').

9. Rake according to Claim 1, characterized in that the position of the blades (7'', 8'') relative to the ground (S) is achieved using an angular transmission device (14) that allows the handle (2'') to be inclined relative to the casing (5''); the said angular transmission device interacting with the drive mechanism (6'') allows the blade (7'') to move transversely back and forth.

10. Rake according to Claim 1, characterized in that the collecting means (12, 16) consist respectively of a deflector and of a metal broom each secured to the casing (5) and to the hollow handle (2'').

11. Rake according to Claim 1, characterized in that a rake (13, 15) is fixed in front of the cutting blades (7, 7', 7''; 8, 8', 8'') in the direction of raking (F).

## Patentansprüche

1. Mechanischer Rechen zum Umbrechen, Schneiden, Abgleichen, Zusammenrechen aller Arten verschiedenster Gräser und Pflanzen, mit einem Hohlstiel (2, 2', 2''), der fest mit einem der Enden eines einen Antriebsmechanismus (6, 6', 6'') einschließenden Gehäuses (5, 5', 5'') verbunden ist, wobei der Antriebsmechanismus von einem Elektro- oder Verbrennungsmotor (3) zur in Querrichtung verlaufenden Hin- und Herbewegung eines ersten Schneidmessers (7, 7', 7'') bezüglich eines zweiten Messers (8, 8', 8''), das so mit dem ersten zusammenwirkt, daß mehrere Parallelscheren gebildet werden, angetrieben wird, dadurch gekennzeichnet, daß es sich bei dem zweiten Messer um ein Schneidmesser handelt und daß der Stiel (2, 2', 2'') des Rechens (1, 1', 1'') in einem Winkel α von ca. 45° bezüglich der Messer geneigt ist, damit sich die Schneidmesser (7, 7', 7'' und 8, 8', 8'') in einer parallel zu der Ebene des Bodens (S) verlaufenden Schneidebene befinden, wobei der Stiel in Rechrichtung (F) ausgerichtet ist, während unter dem zweiten Messer (8, 8', 8'') Gleitschuhe (11, 11', 11'') vorgesehen sind, die gemaß der gewünschten Schneidhöhe bezüglich des Bodens (S) fest oder verstellbar sind, und daß rückwärtig der Schneidmesser Auffangmittel (12, 16) zum vorübergehenden Festhalten der Schneidabfälle befestigt sind.

2. Rechen nach Anspruch 1, dadurch gekennzeichnet, daß das zweite Messer (8) in der Verlängerung jedes Zinkens (8a) den Benutzer schützende Finger (8b) aufweist.

3. Rechen nach Anspruch 1, dadurch gekennzeichnet, daß die Messer (7, 7', 8') jeweils ein Ohr (7b, 7'b, 8'c) aufweisen, das in einem stumpfen Winkel so gebogen ist, daß die Schneidebene der Messer parallel zum Boden (S) verläuft.

4. Rechen nach Anspruch 1, dadurch gekennzeichnet, daß der Elektro- oder Verbrennungsmotor (3) an dem Ende des Hohlstiels (2, 2', 2'') befestigt ist, das sich gegenüber dem Gehäuse (5, 5', 5'') befindet.

5. Rechen nach Anspruch 1, dadurch gekennzeichnet, daß der Antriebsmechanismus (6) aus einer Antriebsachse (6a) besteht, die massiv oder hohl, starr oder biegsam und gegebenenfalls zusammenschiebbar sein kann und an deren Ende eine Hülse (6b) befestigt ist, die im Innern des Gehäuses (5) axial geführt ist und fest mit einer ausgewuchteten Nockenscheibe (6d) verbunden ist, die so mit dem Schneidmesser (7) zusammenwirkt, daß dieses sich in Querrichtung hin- und herbewegt.

6. Rechen nach Anspruch 1, dadurch gekennzeichnet, daß der Antriebsmechanismus (6') aus einer Antriebsachse (6'a) besteht, die massiv oder hohl, starr oder biegsam und gegebenenfalls zusammenschiebbar sein kann und an deren Ende eine Hülse (6'b) befestigt ist, die im Innern des Gehäuses (5') axial geführt ist und fest mit zwei ausgewuchteten Nockenscheiben (6'd, 6'e) verbunden ist, die jeweils so mit den Schneidmessern (7', 8') zusammenwirken, daß diese sich in Querrichtung hin- und herbewegen.

7. Rechen nach Anspruch 6, dadurch gekennzeichnet, daß der Antriebsmechanismus (6') zwei scheibenförmige Nockenscheiben (6'd, 6'e) aufweist, die für die in Querrichtung verlaufende Hin- und Herbewegung der Messer (7', 8') zueinander um 180 Grad versetzt sind.

8. Rechen nach Anspruch 7, dadurch gekennzeichnet, daß die Nockenscheibe (6'd) mit einer länglichen Öffnung (7'a) des Messers (7') zusammenwirkt, während die Nockenscheibe (6'e) in einer länglichen Öffnung (8'b) des Messers (8') eingeführt ist.

9. Rechen nach Anspruch 1, dadurch gekennzeichnet, daß die Position der Messer (7'', 8'') bezüglich des Bodens (S) mittels eines Winkeltriebs (14) erzielt wird, der ein Neigen des Stiels (2'') bezüglich des Gehäuses (5'') gestattet, wobei der mit dem Antriebsmechanismus (6'') zusammenwirkende Winkeltrieb die in Querrichtung verlaufende Hin- und Herbewegung des Messers (7'') gestattet.

10. Rechen nach Anspruch 1, dadurch gekennzeichnet, daß die Auffangmittel (12, 16) jeweils aus einer Ablenkvorrichtung und einer Metallbürste, die fest mit dem Gehäuse (5) und dem Hohlstiel (2'') verbunden sind, bestehen.

11. Rechen nach Anspruch 1, dadurch gekennzeichnet, daß ein Rechen (13, 15) in Rechrichtung (F) vor den Schneidmessern (7, 7', 7''; 8, 8', 8'') befestigt ist.
